Europäisches Patentamt

European Patent Office

Office européen des brevets

(11) Publication number: **0 518 507 A1**

# EUROPEAN PATENT APPLICATION

(21) Application number: **92304599.1**

(22) Date of filing: **20.05.92**

(51) Int. Cl.5: **A23L 1/22,** A23P 1/08,
A23L 1/164

(30) Priority: **13.06.91 GB 9112701**

(43) Date of publication of application:
**16.12.92 Bulletin 92/51**

(84) Designated Contracting States:
**BE CH DE DK ES FR GB LI NL SE**

(71) Applicant: **PAULS plc**
**47 Key Street**
**Ipswich, Suffolk IP4 1BX(GB)**

(72) Inventor: **Seal, Richard**
**27 Chater Road, Oakham**
**Leicestershire LE15 6RY(GB)**
Inventor: **Stevenson, Karen Jane**
**Grove Cottage, 55 The Green, Aston Abbotts**
**Buckinghamshire HP22 4LY(GB)**

(74) Representative: **Bannerman, David Gardner et**
**al**
**Withers & Rogers 4 Dyer's Buildings Holborn**
**London, EC1N 2JT(GB)**

(54) **Method and composition for flavouring snack products.**

(57) A method of preparing a flavouring material to render it suitable for application to a snack base comprising milling a blend of powdered flavouring material and a known quantity of edible oil so that size of the suspended particles of flavouring material is less than 20 microns. A method of flavouring a snack base using the resulting blend and a snack product obtained thereby.

EP 0 518 507 A1

This invention concerns a method and a composition for flavouring a snack product, in particular a snack base such as an expanded product formed from an edible material, for example, maize.

So-called "direct expansion" snack bases based, for example, on maize are obtained by extrusion and the resulting extruded base is conventionally flavoured by the application of a mixture of powdered flavouring material and oil within a rotating flavour drum. The finished product is then packaged. Other snack products are formed by frying snack base pellets and then transferring them from the fryer to a rotating flavour drum which, again, contains powdered flavouring material. Once again, the finished products emerging from the flavour drum are packaged.

The technique of flavouring snack products by the application of powdered flavour or a simple mixture of powdered flavour and edible oil within a rotating flavour drum has been found not to be entirely satisfactory for the following reasons. Firstly, the flavouring material tends to become unevenly distributed over the surface of the snack base. Secondly, a substantial proportion of the flavouring material does not adhere properly to the snack base and is shed and therefore wasted. Thirdly, apart from the waste, this shed flavouring material tends to cause contamination of the factory environment. In addition, the flavouring material does not penetrate into the interior of the snack base sufficiently so that although the outer surface of it may be satisfactorily flavoured, the inside often is not. Furthermore, in conventional methods that involve applying a simple mixture of edible oil and solid flavouring material of relatively large particle size (150-400 microns) to a snack base, the solid particles tend to precipitate causing problems such as blockage of pipework if the mixture is allowed to stand for even a relatively short time.

According to one aspect of the invention, we provide a method of preparing a flavouring material to render it suitable for application to a snack base comprising milling a blend comprising a powdered flavouring material and a known quantity of edible oil so that the size of the suspended particles of flavouring material in the resulting blend is less than 20 microns.

Conventional solid flavouring materials incorporate a free-flow agent, such as tricalcium phosphate or exploded silica powder (e.g. that sold under the trade mark NEOSYL). We have found, suprisingly, that the presence of such free-flow agents is detrimental to the present invention, in that they tend to cause gelification of the mixture as a result of the milling step, and the resulting flavouring material tends to remain on the surface of a snack base rather than penetrating into it.

In the present invention the preferred weight ratio of flavouring material to edible oil is from 1:3 to 2:1. It has been found that if the resulting milled blend is sprayed onto a snack base, the particles of flavouring material penetrate into the interior of the snack base through the pores which are naturally present in the snack base. This advantage is partially attributable to the fact that the size of the solid particles in the milled product is much smaller than that of a conventionally-used particulate flavouring material, in which the particle size is normally within the range 150 to 400 microns. Because the flavouring material penetrates better into the interior of the snack base, the flavour is more evenly distributed through the snack product and there is less tendency of flavouring material to be wasted by not adhering properly to the snack product. This also reduces the likelihood of factory contamination.

Attempts to mill the conventional flavouring materials to a particle size of less than 50 microns, especially less than 20 microns have proved unsuccessful because of the problem of breaking relatively-soft vegetable matter to such a fine particle size by an economically acceptable process.

According to another feature of the invention, a method of flavouring a snack product comprises applying to a snack base a blend of flavouring material and edible oil as defined above.

Spraying from a nozzle is the preferred method of application. This is possible without the risk of blocking the spray nozzle because of the very small size of the particles in the blend.

According to a further feature of the invention, we provide a snack product comprising a snack base which has been flavoured by the application to it of a blend of flavouring material and edible oil as defined above.

The snack base may for example be obtained by frying pellets of a food material or by extrusion of "direct expansion" products, for example maize based products.

Non-limiting examples of the invention will now be given by way of illustration.

Example 1

A flavouring blend of vegetable oil and flavouring ingredients is made up to the following formulation:

2

<u>PRAWN COCKTAIL FLAVOUR</u>                              %
                                                        =====

| | % |
|---|---|
| Vegetable Oil | 55.00 |
| Paprika Oleresin 60,000 cu | 0.12 |
| Salt | 11.48 |
| Sodium Diacetate | 3.38 |
| Milk Powder | 5.00 |
| Sugar | 8.10 |
| Monosodium Glutamate | 4.50 |
| Citric Acid | 1.42 |
| Shrimp Flavour | 0.47 |
| Tomato Powder | 0.90 |
| H.V.P. | 0.90 |
| Autolysed Yeast | 5.20 |
| Pepper | 0.81 |
| Saccharin | 0.07 |
| Tomato Ketchup Flavour | 0.40 |
| Onion Powder | 2.25 |
| | 100.00 |

The resulting mixture was agitated and pumped into a continuous ball mill of the Glen Creston type KDL. The ball mill contained glass beads having a diameter within the range 0.5 to 1.0 mm. The agitator shaft of the ball mill was rotated at 1910 rpm.

The resultant liquid had a smooth consistency, was pourable, and on tasting no particles could be detected by the tongue.

The size of the solid particles within the blend was not greater than about 20 microns.

The ball mill is water cooled to ensure that the temperature of the product at no time exceeds 40°C.

When the resulting mill blend was sprayed onto a snack base in such a quantity that the flavouring material comprised 16% by weight of the whole product, it was found that an equivalent flavour strength was obtained as by applying 20% by weight of flavouring material by a conventional process. After being allowed to stand for 24 hours no flavouring material was visible on the surface product. Tasting tests indicated that the flavour was consistent throughout the body of the stack, confirming penetration of the flavouring material into the interior of the snack base. Moreover, the undesirable "spikiness" of flavour often associated with powdered flavouring materials was not apparent. The spikiness is caused by the tongue reacting at different rates to the different components in an unmilled mixture.

Example 2

A flavouring blend was made up to the following formulation:

| PASTRAMI FLAVOUR | % |
|---|---|
| Vegetable Oil | 50.00 |
| Paprika Oleoresin 60,000 cu | 0.08 |
| Garlic Powder | 5.22 |
| Onion Powder | 6.45 |
| Yeast Extract | 26.50 |
| Smoke Extract | 5.70 |
| Spice Extracts on Salt | 6.05 |

This blend was agitated and pumped into a continuous ball mill of the Glen Creston type KDL, containing glass beads with a diameter of between 1.5 and 2.0 mm. The agitator shaft of the ball mill was rotated at 2,400 rpm.

The milled liquid flavouring blend was found to be both smooth and pourable. The size of the solid

3

particles in it was about 20 microns or less. On tasting there was no evidence of particulate material on the palate. The milled blend was applied to a snack base so that it formed 12% of the whole composition. After being left to stand for 24 hours the flavour was found to have been fully absorbed into the base giving a high and consistent flavour impact when eaten.

Example 3

A blend of vegetable oil and flavouring materials was made up to the following formulation:

| PICKLED ONION FLAVOUR | % |
| --- | --- |
| Vegetable Oil | 56.00 |
| Salt | 11.35 |
| Sodium Diacetate | 11.35 |
| Onion Powder | 10.20 |
| Citric Acid | 1.20 |
| M.S.G. | 2.90 |
| Autolysed Yeast | 3.20 |
| Garlic Powder | 2.00 |
| Roasted Malt Flavour | 1.40 |
| Pepper | 0.40 |

The resulting blend was agitated and pumped into a continuous ball mill of the Glen Creston type KDL containing glass beads with a diameter of between 2.0 and 2.5 mm. The agitator shaft of the ball mill was rotated 2,400 rpm.

The resulting milled liquid blend was found to be pourable. The particle size of the solid content was not greater than about 20 microns and no particulate material could be detected on the palate. The liquid flavouring material was applied to a snack base so that it formed 14 of the total weight of the product.

**Claims**

1. A method of preparing a flavouring material to render it suitable for application to a snack base comprising milling a blend comprising a powdered flavouring material and known quantity of edible oil so that size of the suspended particles of flavouring material in the resulting blend is than 20 microns.

2. A method according to claim 1, wherein the powdered flavouring material does not contain a free-flow agent.

3. A method according to claim 1 or claim 2 in which the weight ratio of powdered flavouring material to edible oil is from 1.3 to 2.1.

4. A method of flavouring a snack product comprising applying to a snack base a blend of a powdered flavouring material and edible oil prepared according to the method of any preceding claim.

5. A method according to claim 4, wherein the blend is sprayed from a nozzle.

6. A snack product comprising a snack base flavoured with a blend of powdered flavouring material and edible oil obtained by the method of any of claims 1-3.

7. A snack product according to claim 6 wherein the snack base has been obtained by frying pellets of the food material or by extrusion of "direct expansion" products.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 238 385 (PROCHAR)<br>* column 7, line 45 - line 60; claim 1 *<br>--- | 1,2,4 | A23L1/22<br>A23P1/08<br>A23L1/164 |
| X | GB-A-2 011 775 (MILLER)<br>* claims 1,5 *<br>--- | 1,3 | |
| X | US-A-4 743 456 (P.F.SPADAFORA  ET AL.)<br>* column 2, line 40 - line 46; claim 1 *<br>--- | 1,4-7 | |
| A | EP-A-0 234 284 (FIRMENICH)<br>* claims *<br>--- | 1,4-7 | |
| A | LU-A-52 419 (W.R.GRACE)<br>* claims *<br>--- | 1,2 | |
| A | FR-A-883 172 (M.-H.JOUBERT)<br>* the whole document *<br>------ | 1,2 | |

| | | | TECHNICAL FIELDS SEARCHED (Int. Cl.5) |
|---|---|---|---|
| | | | A23L<br>A23P |

The present search report has been drawn up for all claims

| Place of search | Date of completion of the search | Examiner |
|---|---|---|
| THE HAGUE | 07 OCTOBER 1992 | VAN MOER A.M.J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

                                                   

& : member of the same patent family, corresponding document

EPO FORM 1503 03.82 (P0401)